# EUROPÄISCHE PATENTANMELDUNG

(11) **EP 0 787 670 A2**
(43) Veröffentlichungstag der Anmeldung: **06.08.1997**
(21) Anmeldenummer: 97100829.7
(22) Anmeldetag: 21.01.1997
(51) Int. Cl.: B65G 45/08

(54) **Vorrichtung zum Reinigen von Förderketten**

(30) Priorität: 29.01.1996 DE 29601457 U
(71) Anmelder: MOTEX Mode-Textil-Service GmbH, 63762 Grossostheim (DE)
(72) Erfinder: McCarty, Mike, 63505 Langenselbold (DE)
(74) Vertreter: Patentanwälte Möll und Bitterich

(57) **Zusammenfassung**

Gegenstand der Erfindung ist eine Vorrichtung zum Reinigen der Förderketten von Hängeförderanlagen. Die Hängeförderanlage ist gebildet durch ein Kettenprofil (2), in dem die Förderkette läuft, und eine darunter angeordnete Laufschiene (4) für Laufwagen. Die Reinigungsvorrichtung besteht aus einem zweiteiligen Gehäuse (10), welches mittels Scharnier (15) aufgeklappt werden kann. Abdichtbürsten (12) an der Innenseite des Gehäuses (10) halten den Schmutz zurück. Zum Reinigen der Förderkette ist eine Preßluftdüse (20) mit Absperrhahn (21) und Anschlußstutzen (22) vorgesehen. Das Kettenprofil (2) besitzt eine Aussparung, in die die Preßluftdüse (20) eingeführt ist, so daß der Preßluftstrahl direkt auf die Förderkette trifft. Gegenüber der Preßluftdüse (20) besitzt das Kettenprofil (2) eine Öffnung, durch die das Gemisch aus Preßluft und Schmutz abgeführt wird. In der Verlängerung der Preßluftdüse (20) ist am Gehäuse (10) ein Absaugstutzen (14), beispielsweise für einen Industriestaubsauger, vorgesehen.

## Beschreibung

Die Erfindung betrifft Vorrichtungen zum Reinigen von Förderketten gemäß dem Oberbegriff des Anspruchs 1.

Endlos umlaufende Förderketten werden in einer Vielzahl von Fördereinrichtungen benutzt. Weit verbreitet sind Hängeförderanlagen mit auf Laufschienen hängenden Laufwagen. Parallel zu den Laufschienen sind Kettenprofile verlegt, in denen endlos umlaufende Förderketten geführt sind. Kupplungen stellen die Verbindung zwischen Laufwagen und Förderkette her.

Aufgrund der Reibung zwischen Förderkette und Kettenprofil entsteht ein Metallabrieb, der mit dem Schmiermittel eine abrasive Paste bildet. Diese kann die Förderketten, insbesondere die Kettengelenke, beschädigen.

Die an den Förderketten haftende Mischung aus Metallabrieb und Schmierfett kann sich infolge der dynamischen Beanspruchungen der Kette während des Betriebs lösen und auf die an den Laufwagen transportierten Fördergüter fallen. Handelt es sich dabei beispielsweise um empfindliche Textilien, ist eine hartnäckige, in der Regel nicht mehr zu entfernende Verschmutzung der Textilien die Folge, was einen gravierenden Warenschaden bedeutet. Aus diesen Gründen ist eine regelmäßige Reinigung der Förderketten wichtig.

Der vorliegenden Erfindung liegt die Aufgabe zugrunde, eine einfache, preiswerte und gleichzeitig hochwirksame Reinigungsvorrichtung für derartige Förderketten anzugeben.

Diese Aufgabe wird gelöst durch eine Reinigungsvorrichtung mit den Merkmalen des Anspruchs 1.

Die erfindungsgemäße Vorrichtung kann an praktisch jeder beliebigen Stelle der Hängeförderanlage angeordnet werden, da lediglich ein Preßluftanschluß erforderlich ist. Es ist sogar möglich, die Reinigungsvorrichtung zwischen den verschiedenen Antriebssträngen einer Hängeförderanlage umzusetzen. Versuche haben gezeigt, daß die Förderkette schon nach zwei Durchläufen durch die Reinigungsvorrichtung praktisch frei von Metallabrieb ist.

Gemäß einer vorteilhaften Ausgestaltung der Erfindung ist ein Scharnier zum Aufklappen des Gehäuses vorgesehen. Dies erleichtert die Montage und Demontage der Reinigungsvorrichtung.

Vorzugsweise ist das Gehäuse der Reinigungsvorrichtung unten geschlossen, um zu verhindern, daß ausgeblasener Metallabrieb aus dem Gehäuse austritt. Andernfalls besteht die Gefahr, daß sich der Metallabrieb weiträumig um die Reinigungsstelle herum verbreitet, was im Hinblick auf die Verschmutzung der Fördergüter aus Qualitätsgründen verhindert werden muß.

Gemäß einer vorteilhaften Ausgestaltung der Erfindung besitzt das Gehäuse Luftschlitze und ist auf seiner Innenseite mit Filtergewebe ausgekleidet. Hierdurch wird die Reinigungswirkung des Preßluftstrahls verbessert und gleichzeitig der Metallabrieb zurückgehalten.

Gemäß einer bevorzugten Weiterbildung der Erfindung ist am Gehäuse ein Absaugstutzen vorgesehen, und zwar gegenüberliegend der Preßluftdüse. An diesen Absaugstutzen kann beispielsweise ein Industriestaubsauger angeschlossen werden, so daß der von der Kette geblasene Abrieb gezielt entsorgt wird.

Ein Absperrhahn an der Preßluftdüse ist besonders bei stationären Reinigungsvorrichtungen angezeigt.

Ein Preßluftanschlußstutzen an der Preßluftdüse ist insbesondere bei mobilen Reinigungsvorrichtungen von Vorteil.

Es versteht sich, daß die Richtung, unter der der Preßluftstrahl auf die Förderkette geblasen wird, für die Reinigungswirkung von Bedeutung ist. Ist die Förderkette eine Kreuzgelenkkette, so empfiehlt sich ein 45 Grad-Winkel.

Anhand der Zeichnung soll die Erfindung in Form eines Ausführungsbeispiels näher erläutert werden. Es zeigen die
- Fig. 1 bis 3: eine Reinigungsvorrichtung in Ansicht, Seitenansicht und Draufsicht und
- Fig. 4: in vergrößertem Maßstab einen Querschnitt durch den funktionswesentlichen Teil der Reinigungsvorrichtung.

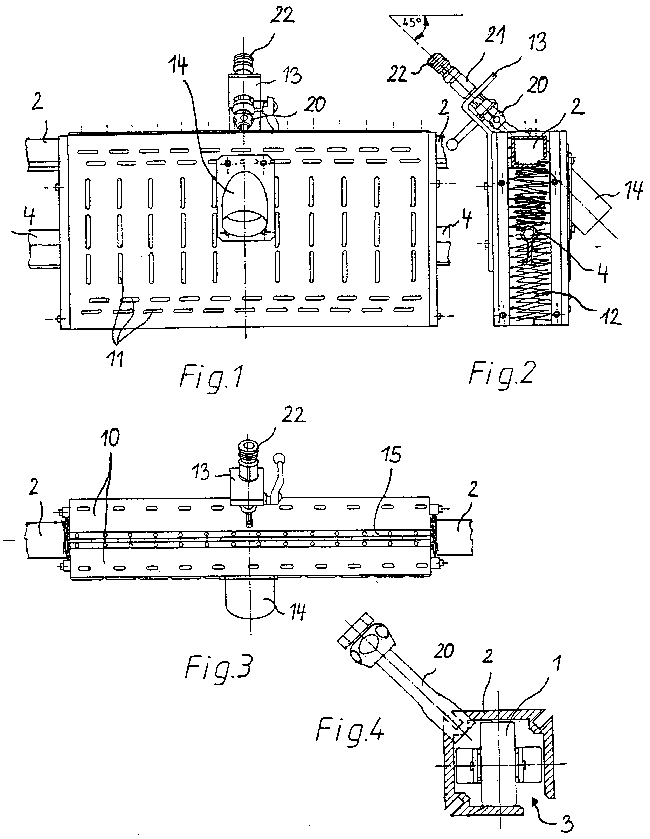

Die Fig. 1 als Ansicht, die Fig. 2 als Seitenansicht und die Fig. 3 als Draufsicht zeigen ein Ausführungsbeispiel einer Kettenreinigungsvorrichtung, die im Zuge einer Hängeförderanlage zur Reinigung der Förderkette Verwendung findet. Die Hängeförderanlage ist gebildet durch ein Kettenprofii 2 mit Kette 1, vorzugsweise aus einem Aluminium-Strangpreßprofil, und einer darunter angeordneten Laufschiene 4 für Laufwagen (nicht dargestellt).

Über Kettenprofil 2 und Laufschiene 4 wurde eine Ketten-Reinigungsvorrichtung gelegt. Diese besteht aus einem zweiteiligen Gehäuse 10, welches mittels eines im Deckel angebrachten Scharniers 15 aufgeklappt werden kann.

Unterhalb der Laufschiene 4 ist das Gehäuse 10 geschlossen, so daß ein beim Reinigen der Förderkette 1 anfallender Schmutz im Gehäuse 10 zurückgehalten wird.

An der Innenseite des Gehäuses 10 sind Abdichtbürsten 12 angebracht. Diese halten an den offenen Stirnseiten den beim Reinigen der Förderkette 1 anfallenden Schmutz zurück.

Zur Reinigung der Förderkette 1 ist an einem Halteblech 13 eine Preßluftdüse 20 angeordnet. Wie Fig. 4 verdeutlicht, besitzt das Kettenprofil 2 eine Aussparung, in die die Preßluftdüse 20 eingeführt ist, so daß der Preßluftstrahl direkt auf die Förderkette 1 trifft. Gegenüber der Preßluftdüse 20 besitzt das Kettenprofil 2 eine Öffnung 3, durch die das Gemisch aus Preßluft und Schmutz abgeführt wird.

In Verlängerung zur Preßluftdüse 20 ist am Gehäuse 10 eine Absaugmöglichkeit, insbesondere ein Absaugstutzen 14 vorgesehen. Hier kann beispielsweise ein Industriestaubsauger angeschlossen werden, der den von der Förderkette 1 abgeblasenen Schmutz und Abrieb absaugt.

Alternativ oder auch zusätzlich kann das Gehäuse 10 mit einer Vielzahl von Luftschlitzen 11 ausgerüstet und auf seiner Innenseite mit Filtergewebe ausgekleidet sein. In diesem Fall muß das Gehäuseinnere in regelmäßigen Abständen gesäubert werden.

Ein Absperrhahn 21 sowie ein Preßluftanschlußstutzen 22 an der Preßluftdüse 20 vervollständigen die Reinigungsvorrichtung.

Zum Reinigen der Förderkette 1 wird zunächst die Förderkette 1 in Bewegung gesetzt. Anschließend wird der Absperrhahn 21 geöffnet, so daß die Preßluftdüse 20 einen Hochdruck-Preßluftstrahl auf die Förderkette 1 bläst. Handelt es sich dabei wie im Ausführungsbeispiel um eine Kreuzgelenkkette, wird der Preßluftstrahl im 45 Grad-Winkel auf die Förderkette 1 gerichtet. Bei anderen Kettentypen ist der Preßluftstrahlwinkel gegebenenfalls anzupassen. Die an der Förderkette 1 anhaftenden Verunreinigungen aus Öl, Fett, Staub und Metallabrieb werden durch den Preßluftstrom gelockert, durch die Öffnung 3 im Kettenprofil 2 ausgeblasen und vom Filtergewebe und den Abdichtbürsten 12 im Gehäuse 10 festgehalten bzw. durch den Absaugstutzen 14 abgeführt. Bereits nach zwei Rundläufen durch die Reinigungsvorrichtung ist die Förderkette 1 sauber.

## Patentansprüche

1. Vorrichtung zum Reinigen von Förderketten (1), die in einem Kettenprofil (2) geführt sind, insbesondere von endlos umlaufenden Förderketten (1) in Hängeförderanlagen mit Laufschienen (4), gekennzeichnet durch
- ein zweiteiliges Gehäuse (10), welches Kettenprofil (2) und Lautschiene (4) umschließt,
- Abdichtbürsten (12) auf der Innenseite des Gehäuses (10),
- eine Preßluftdüse (20), die in das Kettenprofil (2) eingeführt ist und einen Preßluftstrahl auf die Förderkette (1) bläst,
- und eine der Preßluftdüse (20) gegenüberliegende Öffnung (3) im Kettenprofil (2).

2. Vorrichtung nach Anspruch 1, dadurch gekennzeichnet, daß ein Scharnier (15) zum Aufklappen des Gehäuses (10) vorgesehen ist.

3. Vorrichtung nach Anspruch 1 oder 2, dadurch gekennzeichnet, daß das Gehäuse (10) unten geschlossen ist.

4. Vorrichtung nach Anspruch 1, 2 oder 3, gekennzeichnet durch
- Luftschlitze (11) im Gehäuse (10)
- und eine Auskleidung mit Filtergewebe.

5. Vorrichtung nach einem der Ansprüche 1 bis 4, gekennzeichnet durch
- einen oder mehrere Absaugstutzen (14) oder -leisten am Gehäuse (10), der Preßluftdüse (20) gegenüberliegend.

6. Vorrichtung nach einem der Ansprüche 1 bis 5, gekennzeichnet durch
- einen Absperrhahn (21) an der Preßluftdüse (20).

7. Vorrichtung nach einem der Ansprüche 1 bis 6, gekennzeichnet durch
- einen Preßluftanschlußstutzen (22) an der Preßluftdüse (20).

8. Vorrichtung nach einem der Ansprüche 1 bis 7, gekennzeichnet durch
- eine Kreuzgelenkkette als Förderkette (1)
- und eine um 45 Grad gegen die Senkrechte geneigte Preßluftdüse (20).
